# EUROPÄISCHE PATENTSCHRIFT

(11) **EP 0 776 434 B1**
(45) Veröffentlichungstag und Bekanntmachung des Hinweises auf die Patenterteilung: **04.08.1999**
(21) Anmeldenummer: 96919616.1
(22) Anmeldetag: 31.05.1996
(51) Int. Cl.: F16H 61/00

(54) **HYDRAULIKSTEUERUNG FÜR EINE ÄNDERUNG DES HYDRAULIKÖLDRUCKS IN DER HYDRAULISCHEN KEGELSCHEIBENAXIALVERSTELLUNG EINES STUFENLOSEN UMSCHLINGUNGSGETRIEBES ZUR VARIATION DER KLEMMKRAFT**
HYDRAULIC CONTROL UNIT FOR CHANGING THE HYDRAULIC-FLUID PRESSURE TO MODIFY THE LOCKING FORCE IN THE MITRE-WHEEL AXIAL-ADJUSTMENT UNIT OF A CONTINUOUSLY VARIABLE WRAP-AROUND TRANSMISSION
COMMANDE HYDRAULIQUE DESTINEE A MODIFIER LA PRESSION DE L'HUILE HYDRAULIQUE DANS LE DISPOSITIF DE REGLAGE AXIAL DU DISQUE CONIQUE D'UNE TRANSMISSION A VARIATION CONTINUE A ELEMENT REFERME SUR LUI-MEME, AFIN DE FAIRE VARIER LA FORCE DE SERRAGE

(30) Priorität: 22.06.1995 DE 19522674
(43) Veröffentlichungstag der Anmeldung: 04.06.1997
(73) Patentinhaber: ROBERT BOSCH GMBH, 70442 Stuttgart (DE)
(72) Erfinder: LUH, Joachim, D-74321 Biegigheim-Bissingen (DE)
(86) Internationale Anmeldenummer: DE9600952
(87) Internationale Veröffentlichungsnummer: WO9701050

(56) Entgegenhaltungen:
- EP-A- 0 424 005
- EP-A- 0 451 887

## Beschreibung

### Stand der Technik

Die Erfindung geht von einer Hydrauliksteuerung nach dem Oberbegriff des Hauptanspruchs aus.

In der EP 0 451 887 A1 wird eine Hydrauliksteuerung für ein elektronisch gesteuertes, kontinuierlich variables Getriebe (continuously variable transmission: CVT) beschrieben. Das CVT-Getriebe, das vorzugsweise in Kraftwagen verwendet wird, weist u.a. eine elektronische Steuerung auf, die den Hydrauliköldruck im sekundärseitigen Kolbenraum regelt, um während des Normalfahrbetriebs die Klemmkraft so einzustellen, daß ein günstiger Getriebewirkungsgrad erzielt wird. Die Steuerung benötigt zur Regelung des Sekundäröldrucks den jeweils aktuellen Druckwert im Bereich des sekundärseitigen Kolbenraums. Dazu ist dort ein Drucksensor angeordnet. Entsprechend dem gemessenen Istdruck wird der Solldruck über ein direktgesteuertes Ventil eingestellt.

### Vorteile der Erfindung

Die erfindungsgemäße Hydraulikschaltung umfaßt u.a. ein Druckstufenventil zur Regelung des Sekundäröldrucks, das von einem elektrisch betätigten Stromregelventil gesteuert wird. Die Bestromung der elektrischen Betätigung des Stromregelventils erfolgt durch eine Steuereinheit, die über einen Drucksensor den Steueröldruck der zu dem Druckstufenventil führenden Steuerleitung erfaßt. Die Steuereinheit beinhaltet u.a. neben einer Sensorsignalauswertung und einem elektronischen Druckregler ein Multiplizierteil, dessen Multiplikator das Verhältnis zwischen der steueröldruckseitigen und der sekundäröldruckseitigen Druckangriffsfläche des Druckstufenventilschiebers darstellt. Da sich die an den Druckstufenventilschieber anliegenden Hydrauliköldrücke umgekehrt proportional zu den beiden Druckangriffsflächen verhalten, kann aus dem jeweiligen Steueröldruck der Sekundäröldruck errechnet werden. Entsprechend dem errechneten Sekundäröldruck wird das Stromregelventil bestromt.

Aufgrund der Erfindung ist es nicht mehr notwendig, den Drucksensor an oder in einer mit dem hohen Sekundäröldruck beaufschlagten Arbeitsleitung oder dem sekundärseitigen Kolbenraum anzuschließen. Vielmehr wird nur noch ein Drucksensor gebraucht, der für den niedrigeren Steueröldruck ausgelegt ist. Es kann damit ein einfacher und kostengünstiger Sensor eingesetzt werden, der ohne eigene Ölvorlage auskommt.

Ferner kann der den Steueröldruck erfassende Sensor auch fernab der entsprechenden Steuerleitung installiert werden, z.B. direkt in die Steuereinheit.

Des weiteren wird die Charakteristik der Regelstrecke für den in der Steuereinheit untergebrachten elektronischen Druckregler günstiger, da zumindest zwei dynamische Elemente wegfallen. Diese sind beispielsweise zum einen die Schieberdynamik eines direktgesteuerten Druckbegrenzungsventils und zum anderen die Elastizität des sekundärseitigen Kolbenraums einschließlich der dazugehörenden Arbeitsleitungsabschnitte.

### Zeichnungen

Ein Ausführungsbeispiel der Erfindung ist neben dem Stand der Technik in den Zeichnungen schematisch in Form von Hydraulikschaltplänen dargestellt und in der nachfolgenden Figurenbeschreibung näher erläutert. Es zeigt
- Figur 1: einen Hydraulikschaltplan mit einem Drucksensor in der Sekundärleitung und
- Figur 2: einen Hydraulikschaltplan mit einem Drucksensor in einer mit Steueröldruck beaufschlagten Steuerleitung.

### Beschreibung der Ausführungsbeispiele

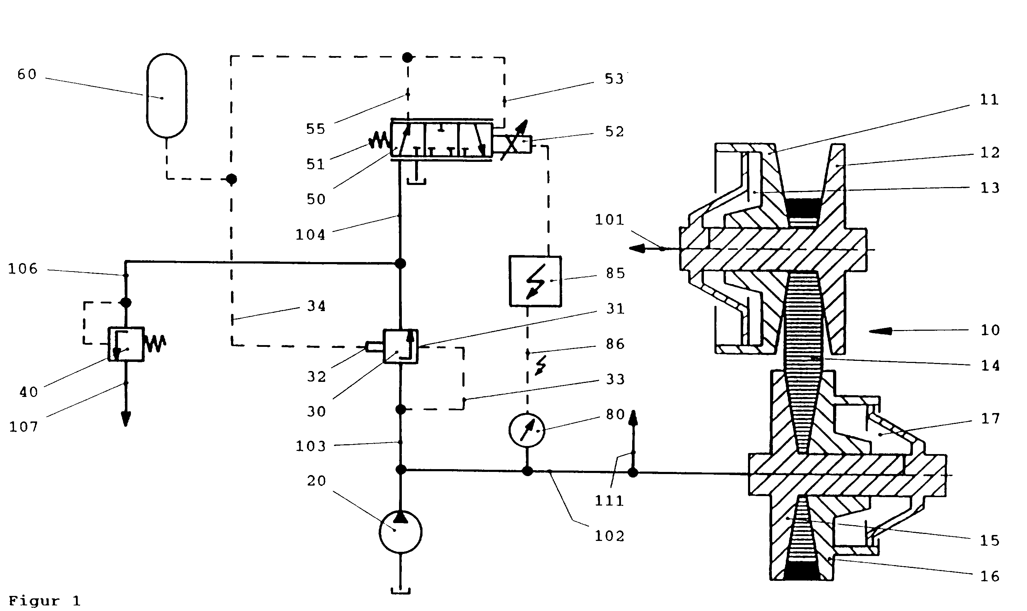

Figur 1 zeigt einen, dem Stand der Technik entsprechenden Ausschnitt aus einem Hydraulikschaltplan zur Steuerung des Hydrauliköldrucks des abtriebsseitigen Druckzylinders eines stufenlos übersetzenden Umschlingungsgetriebes. Das bekannte Umschlingungsgetriebe (10) umfaßt zwei Kegelscheibenpaare zwischen denen ein Übertragungsmittel (14), beispielsweise ein Schubgliederband, eine Kette, ein Keilriemen oder dergleichen, angeordnet ist. Beide Kegelscheibenpaare bestehen jeweils aus zwei Kegelscheiben (11, 12; 15, 16), die hydraulisch gegeneinander verspannbar ausgebildet sind. Die dazu notwendigen Kolben- und Zylinderteile sind vorzugsweise zumindest in einem Teil der Kegelscheiben integriert. Die von diesen Teilen eingeschlossenen Kolbenräume sind auf der Primärseite der Kolbenraum (13) und auf der Sekundärseite der Kolbenraum (17). Sie werden entsprechend der eingestellten Obersetzung mit dem jeweiligen Arbeitsdruck beaufschlagt.

Zum Aufbringen der notwendigen Klemmkraft an dem sekundärseitigen Scheibenpaar (15, 16) wird eine in Figur 1 dargestellte, zum Teil bekannte Hydraulikschaltung verwendet. Eine Pumpe (20) versorgt zum einen über eine Arbeitsleitung (103) und eine davon abzweigende Sekundärleitung (102) direkt den sekundärseitigen Kolbenraum (17). Zum anderen fördert sie Hydrauliköl über die Leitung (103) und die beiden Druckbegrenzungsventile (30) und (40) sowie die sie verbindenden Arbeitsleitungen (104) und (106) in eine weiterführende Arbeitsleitung (107). An letztere können nachgeschaltete, weitere hydraulische Baugruppen angeschlossen sein.

Das Druckbegrenzungsventil (30) ist ein Druckstufenventil mit zwei Steueranschlüssen (31) und (32). Es hat einen Schieber oder dergleichen mit zwei verschieden großen Flächen für die Steuerdruckbeaufschlagung. Dabei ist die wirksame Fläche im Bereich des Steueranschlusses (32) größer als die wirksame Fläche im Bereich des Steueranschlusses (31).
Das Druckstufenventil (30) begrenzt seinen Eingangsdruck proportional zu einem am Steueranschluß (32) anliegenden Steueröldruck. Den Steueröldruck liefert ein kontinuierlich arbeitendes Stromregelventil (50). Dieses Ventil ist beispielsweise ein 3/3-Proportionalwegeventil, dessen Schieber zwischen einer Rückstellfeder (51) und einer elektrischen Betätigung (52) eingespannt ist.

Der Hub des Stromregelventils (50) wird von einer elektronischen Steuerung (85) vorgegeben. Dazu erhält die Steuerung (85) über eine elektrische Signalleitung (86) von einem an der Sekundärleitung (102) angeschlossenen Drucksensor (80) Signale, die ein Maß für den Sekundäröldruck darstellen. Die Steuerung generiert mit Hilfe der empfangenen Drucksensorsignale eine entsprechende Bestromung der elektrischen Betätigung (52).

Das Stromregelventil (50) verbindet im unbestromten Zustand ungedrosselt die Arbeitsleitung (104) mit der Steuerleitung (55). Letztere teilt sich in die zum Druckstufenventil (30) führende Steuerleitung (34) und eine Steuerleitung (53) auf. Die Steuerleitung (53) ist am Stromregelventil (50) neben der elektrischen Betätigung (52) angeschlossen, so daß ihr Steueröldruck der Rückstellfeder (51) entgegenwirkt.

An die Steuerleitung (34) ist ggf. ein Hydraulikspeicher (60) angeschlossen. Er kann u.a. als Federspeicher ausgeführt sein.

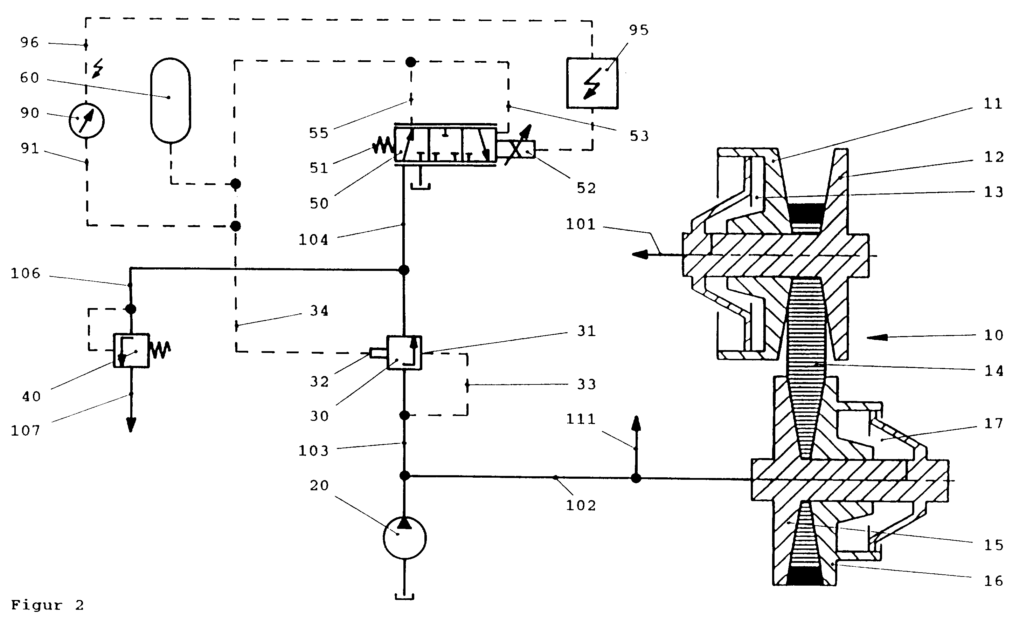

Zum Erzeugen der erforderlichen Klemmkraft an dem primärseitigen Scheibenpaar (11, 12) wird eine übliche, in den Figuren 1 und 2 nicht dargestellte Hydraulikschaltung verwendet. Sie ist u.a. zwischen dem Arbeitsleitungsabschnitt (111) und der Primärleitung (101) geschaltet.

Bei dem Betrieb des Getriebes befindet sich der Schieber des Druckstufenventils (30) im Gleichgewicht. Auf der einen Seite wirkt der Pumpendruck über die Steuerleitung (33) auf die kleinere Schieberfläche in Öffnungsrichtung. An der anderen Seite steht über die Steuerleitung (34) der Steueröldruck in Schließrichtung an der größeren Schieberfläche an. Hierbei wird die Höchstgrenze des Steueröldrucks durch das Druckbegrenzungsventil (40) vorgegeben. Die unter der Höchstgrenze liegenden Vorsteuerdrücke werden durch das Stromregelventil (50) bestimmt. Bei niedrigem Sekundäröldruck, gemessen vom Drucksensor (80), wird die elektrische Betätigung (52) nicht oder minimal bestromt. In dieser Phase entspricht der Hydrauliköldruck in der Arbeitsleitung (104) dem Steueröldruck. Während der Offenstellung des Stromregelventils (50) wird der Hydraulikspeicher (60) geladen.

Bei höherem Druck in den Arbeitsleitungen (102-104) drosselt zum einen der Steueröldruck über die Steuerleitungen (55) und (53) und zum anderen die höhere Bestromung der elektrischen Betätigung (52) das Stromregelventil (50).

In Figur 2 ist eine Hydrauliksteuerung dargestellt, bei der nicht der Sekundäröldruck, sondern der Steueröldruck gemessen wird. Dazu ist ein Drucksensor (90) über eine Fühlerleitung (91) an der Steuerleitung (34) angeschlossen. Da das Druckstufenventil (30) den Sekundäröldruck immer proportional zum Steueröldruck regelt, kann aus dem Steueröldruck durch eine Multiplikation mit einem bestimmten Faktor der Sekundäröldruck berechnet werden. Der Faktor entspricht hier dem Verhältnis der beiden Druckangriffsflächen am Schieber des Druckstufenventils (30), wobei das Verhältnis der Quotient von großer Fläche bei dem Steueranschluß (32) zur kleinen Fläche am Steueranschluß (31) ist.

Das von dem Drucksensor (90) gelieferte Signal wird einer Steuereinheit (95) über eine elektrische Signalleitung (96) zugeführt, um dort aufbereitet und mit dem entsprechenden Faktor multipliziert für die Bestromung der elektrischen Betätigung (52) verwendet zu werden.

Auf diese Weise kann ein Drucksensor (90) eingesetzt werden, der anstatt für einen hohen Sekundäröldruck nur für einen niedrigen Steueröldruck ausgelegt zu sein braucht. Die Steuereinheit (90) muß gegenüber der Steuereinheit (80) aus Figur 1 nur geringfügig geändert bzw. eingestellt werden, da derartige Steuereinheiten in der Regel über einstellbare, multiplikative Ausgangssignalverstärkungen verfügen.

Unabhängig hiervon kann die elektrische Ventilbetätigung auch durch ein hydraulisches Vorsteuerventil oder andere gleichwirkende Mittel ersetzt werden.

## Patentansprüche

1. Hydrauliksteuerung für eine Änderung des Hydrauliköldrucks in der hydraulischen Kegelscheibenaxialverstellung eines stufenlosen Umschlingungsgetriebes (10) zur Variation der Klemmkraft, bei der in einer offenen Hydraulikschaltung eine Pumpe (20) zumindest den Kolbenraum der sekundären Axialverstelleinrichtung mit Hydrauliköl versorgt, wobei der Hydrauliköldruck für den sekundären Kolbenraum (17) über einzelne Ventile zur Öldruckbegrenzung gesteuert wird, von denen zumindest ein Ventil (50), das über eine Steuerdruckleitung (34) ein zur Ansteuerung eines den Sekundäröldruck begrenzendes Druckstufenventil (30) ansteuert, elektrisch in Abhängigkeit von dem Signal eines Drucksensors (90), das über eine Steuereinheit zugeführt wird, betätigt wird, dadurch gekennzeichnet,
- daß der Drucksensor (90) an der Steuerdruckleitung (34) des Druckstufenventils (30) angeschlossen ist und
- daß zwischen dem Drucksensor (90) und der elektrischen Betätigung (52) des den Steueröldruck einstellenden Ventils (50) die Steuereinheit (95) mit einem Multiplizierteil angeordnet ist, wobei die Steuereinheit (95) das Drucksensorsignal zur Erzeugung der erforderlichen Bestromung der elektrischen Betätigung (52) aufbereitet.

2. Hydrauliksteuerung gemäß dem Anspruch 1, dadurch gekennzeichnet, daß der Multiplikator des Multiplizierteils ein Quotient ist, dessen Dividend die steueröldruckseitige Druckangriffsfläche des Schiebers des Druckstufenventils (30) darstellt, während der Divisor die entsprechende sekundäröldruckseitige Druckangriffsfläche ist.

3. Hydrauliksteuerung gemäß dem Anspruch 1, dadurch gekennzeichnet, daß an die Steuerleitung (34) parallel zum Drucksensor (90) ein Hydraulikspeicher (60) angeordnet ist.

4. Hydrauliksteuerung gemäß dem Anspruch 1, dadurch gekennzeichnet, daß dem Druckstufenventil (30) ein Druckbegrenzungsventil (40) nachgeschaltet ist.

## Claims

1. Hydraulic control unit for changing the hydraulic-fluid pressure in the hydraulic mitre-wheel axial-adjustment unit of a continuously variable wrap-around transmission (10) for varying the clamping force, in which control unit a pump (20) supplies at least the pump space of the secondary axial adjustment device with hydraulic fluid in an open hydraulic circuit, the hydraulic-fluid pressure for the secondary piston space (17) being controlled by means of individual valves in order to limit fluid pressure, at least one valve (50) of which drives, via a control pressure line (34), a pressure stage valve (30) which limits the secondary oil pressure, being activated electrically as a function of the signal of a pressure sensor (90), which signal is fed via a control unit, characterized
- in that the pressure sensor (90) is connected to the control pressure line (34) of the pressure stage valve (30), and
- in that the control unit (95) with a multiplier component is arranged between the pressure sensor (90) and the electrical activator (52) of the valve (50) which sets the control fluid pressure, the control unit (95) conditioning the pressure sensor signal in order to generate the necessary energization of the electrical actuator (52).

2. Hydraulic control unit according to Claim 1, characterized in that the multiplier of the multiplier component is a quotient whose dividend represents the control-fluid-pressure-end pressure action face of the slide of the pressure stage valve (30), while the divisor is the corresponding secondary-fluid-pressure-end pressure action face.

3. Hydraulic control unit according to Claim 1, characterized in that a hydraulic accumulator (60) is arranged on the control line (34) parallel to the pressure sensor (90).

4. Hydraulic control unit according to Claim 1, characterized in that a pressure limiting valve (40) is connected downstream of the pressure stage valve (30).

## Revendications

1. Commande hydraulique servant à modifier la pression hydraulique dans le dispositif de réglage hydraulique axial de disques coniques d'une transmission (10) à variation continue à élément refermé sur lui-même, afin de faire varier la force de serrage, dans laquelle dans un circuit hydraulique ouvert une pompe (20) alimente en huile hydraulique au moins la chambre de piston du dispositif de réglage axial secondaire, la pression d'huile hydraulique pour la chambre de piston secondaire (17),étant commandée par l'intermédiaire de différentes vannes servant à limiter la pression de l'huile, parmi lesquelles au moins une vanne (50), qui commande par l'intermédiaire d'une conduite sous pression de commande (34) un limiteur proportionnel de pression (30), qui limite la pression d'huile secondaire, est actionnée électriquement en fonction du signal d'un détecteur de pression (90), qui est amené par une unité de commande,
caractérisée en ce que
• le détecteur de pression (90) est raccordé à la conduite sous pression de commande (34) du limiteur proportionnel de pression (30) et
• entre le détecteur de pression (90) et l'appareil électrique d'actionnement (52) de la vanne (50) qui règle la pression d'huile de commande on dispose l'unité de commande (95) avec une partie multiplicatrice, l'unité de commande (95) préparant le signal du détecteur de pression pour produire l'alimentation en courant nécessaire de l'appareil électrique d'actionnement (52).

2. Commande hydraulique selon la revendication 1,
caractérisée en ce que
le multiplicateur de la partie multiplicatrice est un quotient, dont le dividende représente la surface de mise en pression située du côté de la pression d'huile de commande du tiroir du limiteur proportionnel de pression (30), tandis que le diviseur est la surface correspondante de mise en pression située du côté de la pression d'huile secondaire.

3. Commande hydraulique selon la revendication 1,
caractérisée en ce qu'
on dispose sur la conduite de commande (34) parallèlement au détecteur de pression (90) un accumulateur hydraulique (60).

4. Commande hydraulique selon la revendication 1,
caractérisée en ce qu'
on monte en aval du limiteur proportionnel de pression (30) une vanne de limitation de la pression (40).
